(19)

Europäisches
Patentamt
European
Patent Office
Office européen
des brevets

(11)  **EP 4 498 456 A1**

(12)  **EUROPEAN PATENT APPLICATION**
published in accordance with Art. 153(4) EPC

(43)  Date of publication:
**29.01.2025   Bulletin 2025/05**

(21)  Application number: **24742814.7**

(22)  Date of filing: **06.02.2024**

(51)  International Patent Classification (IPC):
**H01M 8/0284** (2016.01)          **C08L 33/14** (2006.01)
**C08L 63/00** (2006.01)          **C09K 3/10** (2006.01)
**C25B 1/04** (2021.01)          **C25B 9/00** (2021.01)
**C25B 9/60** (2021.01)          **H01M 8/0271** (2016.01)
**H01M 8/10** (2016.01)

(86)  International application number:
**PCT/JP2024/003792**

(87)  International publication number:
**WO 2024/257391 (19.12.2024 Gazette 2024/51)**

(84)  Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30)  Priority:  **12.06.2023   JP 2023096213**

(71)  Applicant: **Panac Co., Ltd.
Tokyo 108-0023 (JP)**

(72)  Inventor: **NAKANO, Shota
Fujinomiya-shi, Shizuoka 4180112 (JP)**

(74)  Representative: **Müller-Boré & Partner
Patentanwälte PartG mbB
Friedenheimer Brücke 21
80639 München (DE)**

(54)  **RESIN COMPOSITION FOR SEALING MATERIAL, SEALING MATERIAL USING SAID RESIN COMPOSITION, AND SOLID POLYMER FUEL CELL AND WATER ELECTROLYSIS DEVICE USING SAID SEALING MATERIAL**

(57)  There is provided a resin composition, containing (A) an acrylic resin, (B) an epoxy resin, and (C) a curing agent for the epoxy resin, wherein the acrylic resin (A) has a glass transition temperature of 5°C to 35°C; the acrylic resin (A) is a copolymer of starting material monomers containing (a1) methyl methacrylate, (a2) styrene and (a3) glycidyl (meth)acrylate; the proportion of the glycidyl (meth)acrylate (a3) in the total amount of the starting material monomers is less than 3.0% by mass; and the total content of the epoxy resin (B) and the curing agent for the epoxy resin, (C) is 1 part by mass to 30 parts by mass per 100 parts by mass of the acrylic resin (A). The resin composition can bring about good reworkability and good adhesiveness between sealing material layers.

**EP 4 498 456 A1**

## Description

Technical Field

The present invention relates to a resin composition for a sealing material for solid polymer fuel cells, a sealing material including the resin composition, and a solid polymer fuel cell and a water electrolyzer including the sealing material.

Background Art

Solid polymer fuel cells (hereinafter referred to also as "fuel cells" in some cases) simultaneously generate electric power and heat by electrochemically reacting a fuel gas containing hydrogen with an oxidant gas containing oxygen.

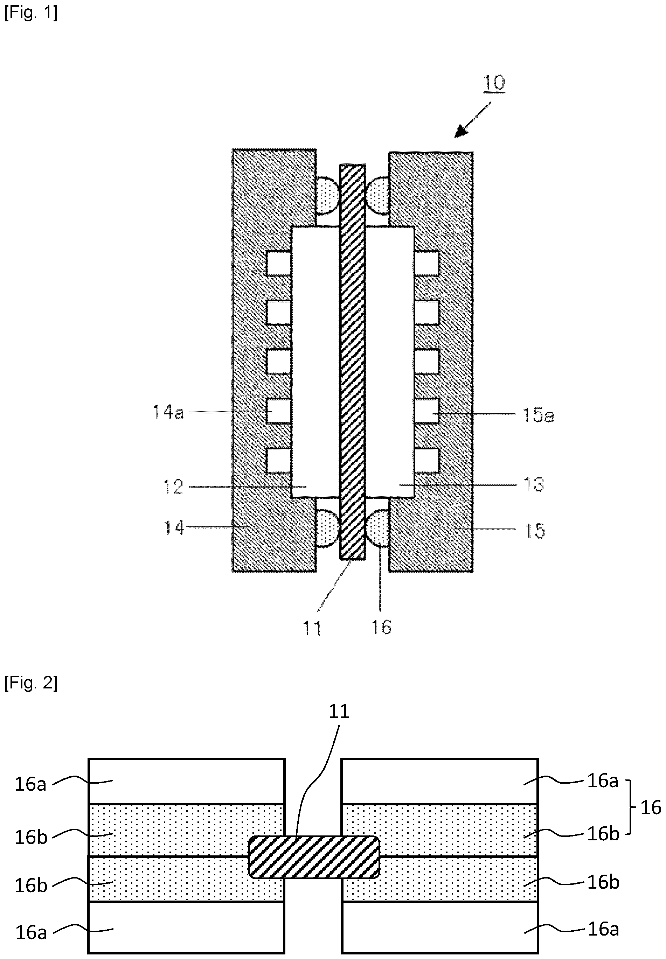

Fig. 1 shows a cross-sectional view of a cell 10 as a constitutional unit of a general fuel cell. The general fuel cell is constituted by, for example, laminating a few tens to a few hundreds of the cells 10. The cell 10 has a sealing material 16, for the purpose of fixing an electrolyte membrane 11, for example.
For sealing materials for fuel cells, technologies of Patent Literatures 1 and 2 are proposed, for example.

Citation List

Patent Literature

PTL1: JP 2016-94581 A
PTL2: JP 2015-2029 A

Summary of Invention

Technical Problem

In recent years, enhancing the yield of each product has been demanded to reduce environmental loads. Hence, sealing materials for fuel cells need to have a characteristic such that, after the sealing materials are affixed, the positions thereof can be corrected.
Herein, the above-mentioned characteristic is referred to as "reworkability" in some cases. Patent Literatures 1 and 2 make no study on the reworkability.
A possible approach to improvement in the reworkability of sealing materials for fuel cells is to reduce the tack of the sealing material layer. In recent years, however, there have been used cells having regions where sealing material layers face each other and also adhere to each other, as in Fig. 2. In such cells, when the sealing material layers have reduced tack, there arises a problem of insufficient adhesiveness between the sealing material layers.
The present invention has an object to provide a resin composition for a sealing material, the composition bringing about good reworkability and also good adhesiveness between sealing material layers; a sealing material including the resin composition; and a solid polymer fuel cell and a water electrolyzer including the sealing material.

Solution to Problem

In order to achieve the above object, the present invention provides the following [1] to [11].

[1] A resin composition for a sealing material, comprising (A) an acrylic resin, (B) an epoxy resin, and (C) a curing agent for the epoxy resin,

wherein the acrylic resin (A) has a glass transition temperature of 5°C or higher and 35°C or lower;
the acrylic resin (A) is a copolymer of starting material monomers containing (a1) methyl methacrylate, (a2) styrene and (a3) glycidyl (meth)acrylate;
the proportion of the glycidyl (meth)acrylate (a3) in the total amount of the starting material monomers is less than 3.0% by mass; and
the total content of the epoxy resin (B) and the curing agent for the epoxy resin, (C) is 1 part by mass or more and 30 parts by mass or less, per 100 parts by mass of the acrylic resin (A).

[2] The resin composition according to [1], wherein the epoxy resin (B) is any one or more selected from the group consisting of phenol novolac type epoxy resins, bisphenol A type epoxy resins and bisphenol F type epoxy resins.

[3] The resin composition according to [1] or [2], wherein the epoxy resin (B) has an epoxy equivalent of 150 g/eq or more and 1,500 g/eq or less.

[4] The resin composition according to any one of [1] to [3], wherein the curing agent for the epoxy resin, (C) is a polyamine-based curing agent.

[5] A sealing material formed of the resin composition according to [1].

[6] A sealing material having a first base material, a sealing material layer and a second base material in this order, wherein the sealing material layer is formed of the resin composition according to any one of [1] to [4]; and at least one of the first base material and the second base material is peelable.

[7] The sealing material according to [5] or [6], wherein the sealing material is a sealing material for a solid polymer fuel cell.

[8] The sealing material according to [5] or [6], wherein the sealing material is a sealing material for a water electrolyzer.

[9] A solid polymer fuel cell, having a sealing site including the sealing material according to [7].

[10] The solid polymer fuel cell according to [9], wherein in the solid polymer fuel cell, the sealing material has a sealing material layer formed of the resin composition according to [1], and the solid polymer fuel cell has a region where the sealing material layers face each other and adhere to each other.

[11] A water electrolyzer, having a sealing site including the sealing material according to [8].

Advantageous Effects of Invention

The resin composition for a sealing material of the present invention, the sealing material using the resin composition, and the solid polymer fuel cell and the water electrolyzer using the sealing material can exhibit good reworkability and good adhesiveness between sealing material layers.

Brief Description of Drawings

[Fig. 1] Fig. 1 is a cross-sectional view showing an example of a cell constituting a fuel cell.

[Fig. 2] Fig. 2 is a cross-sectional view showing a part of another example of a cell constituting a fuel cell.

[Fig. 3] Fig. 3 is a cross-sectional view showing an example of a sealing material.

Description of Embodiments

[Resin composition for sealing material]

The resin composition for a sealing material of the present invention comprises (A) an acrylic resin, (B) an epoxy resin, and (C) a curing agent for the epoxy resin,

wherein the acrylic resin (A) has a glass transition temperature of 5°C or higher and 35°C or lower;

the acrylic resin (A) is a copolymer of starting material monomers containing (a1) methyl methacrylate, (a2) styrene and (a3) glycidyl (meth)acrylate;

the proportion of the glycidyl (meth)acrylate (a3) in the total amount of the starting material monomers is less than 3.0% by mol; and

the total content of the epoxy resin (B) and the curing agent for the epoxy resin, (C) is 1 part by mass or more and 30 parts by mass or less, per 100 parts by mass of the acrylic resin (A).

<(A) acrylic resin>

The acrylic resin (A) is a copolymer of starting material monomers containing (a1) methyl methacrylate, (a2) styrene and (a3) glycidyl (meth)acrylate.

The acrylic resin (A) is a main component of the resin composition. The content of the acrylic resin (A) is preferably 77% by mass or more and 99% by mass or less, more preferably 80% by mass or more and 99% by mass or less and still more preferably 85% by mass or more and 99% by mass or less, with respect to the total amount of the resin composition.

The acrylic resin (A) has a glass transition temperature of 5°C or higher and 35°C or lower. If the glass transition temperature is lower than 5°C, good reworkability cannot be obtained. If the glass transition temperature is higher than 35°C, good adhesiveness between sealing material layers cannot be obtained.

The glass transition temperature of the acrylic resin (A) is preferably 5°C or higher and 27°C or lower, and more preferably 5°C or higher and 20°C or lower.

The glass transition temperature of the acrylic resin (A) can be regulated, for example, by the weight-average molecular weight of the acrylic resin (A). It is likely that when the weight-average molecular weight is higher, the glass transition temperature is higher; and that when the weight-average molecular weight is lower, the glass transition temperature is lower.

The glass transition temperature of the acrylic resin (A) can also be regulated by (a4) ethyl (meth)acrylate described later. It is likely that when the proportion of the ethyl (meth)acrylate (a4) in the total amount of the starting material monomers is higher, the glass transition temperature is lower; and that when the proportion of the ethyl (meth)acrylate (a4) in the total amount of the starting material monomers is lower, the glass transition temperature is higher.

Herein, the weight-average molecular weight is a value, in terms of polystyrene, measured by gel permeation chromatography (GPC).

«(a1) Methyl methacrylate»

Due to (a1) methyl methacrylate contained as the starting material monomers of the acrylic resin (A), the following effects i) to iii) can be expected, for example. On the other hand, if the proportion of the methyl methacrylate (a1) contained is too high, the hardness of a sealing material layer is high so that it may be difficult for the sealing material to follow the shape of adherends in some cases. Hence, taking into consideration the balance between the following effects i) to iii) and the hardness of the sealing material layer, it is preferable to regulate the proportion of the methyl methacrylate (a1) contained.

i) The glass transition temperature of the acrylic resin (A) can be finely regulated, and therefore, the adhesiveness and the bonding condition between materials having different polarities can easily be controlled. As the proportion of the methyl methacrylate (a1) contained increases, the glass transition temperature of the acrylic resin (A) is likely to rise. Polar materials include electrolyte membranes of fuel cells, and non-polar materials include parts other than electrolytes of fuel cells.

ii) The weight reduction of the acrylic resin (A) due to decomposition by moisture and an acid can be suppressed, and therefore, the decreases in the cohesive force and the adhesive force of the sealing material under high temperature and high humidity can easily be suppressed.

iii) The softening point of the acrylic resin (A) can be high, and therefore, the handleability in use as the sealing material can be good.

The content of the methyl methacrylate (a1) is preferably 10% by mass or more and 45% by mass or less, more preferably 15% by mass or more and 40% by mass or less and still more preferably 20% by mass or more and 35% by mass or less, with respect to the total amount of the starting material monomers.

«(a2) Styrene»

Styrene, which is a non-polar component composed of CH as constituent elements, can easily bring about good adhesiveness between materials having different polarities. Further, styrene, which has a relatively high glass transition temperature, can improve the cohesive force of the resin composition to thereby easily improve the heat-resistant adhesiveness of the resin composition. Further, styrene contained can easily reduce the tack of the sealing material layer. On the other hand, when the proportion of the styrene (a2) contained is too high, the hardness of the sealing material layer is high so that it may be difficult for the sealing material to follow the shape of adherends in some cases. Hence, taking into consideration the balance between the above-mentioned effects and the hardness of the sealing material layer, it is preferable to regulate the proportion of the styrene (a2) contained.

General approaches to impart a function of the heat-resistant adhesiveness to a resin composition includes adding an additive such as a silane coupling agent or a tackifier to the resin. The blending the additive, however, may cause the additive to bleed out from the sealing material layer in some cases. By contrast, the use of the styrene (a2) as the starting material monomers for the acrylic resin (A) poses no problem of the bleeding out, and is thus preferable.

The content of the styrene (a2) is preferably 1% by mass or more and 30% by mass or less, more preferably 5% by mass or more and 25% by mass or less and still more preferably 10% by mass or more and 20% by mass or less, with respect to the total amount of the starting material monomers.

<<(a3) Glycidyl (meth)acrylate>>

The acrylic resin (A) contains less than 3.0% by mol of (a3) glycidyl (meth)acrylate, with respect to the total amount of the starting material monomers. If the proportion of the glycidyl (meth)acrylate (a3) contained is 3.0% by mol or more, good adhesiveness between the sealing material layers cannot be obtained. On the other hand, if no glycidyl (meth)acrylate (a3) is contained as the starting material monomers for the acrylic resin (A), good reworkability cannot be obtained.

The content of the glycidyl (meth)acrylate (a3) is preferably 0.1% by mass or more and less than 3.0% by mass and more preferably 0.5% by mass or more and 2.0% by mass or less, with respect to the total amount of the starting material monomers.

As the glycidyl (meth)acrylate, either of glycidyl acrylate and glycidyl methacrylate can suitably be used, but in view of polymerization versatility, it is more preferable to use glycidyl methacrylate.

<<(a4) Ethyl (meth)acrylate>>

It is preferable that the acrylic resin (A) should further contain (a4) ethyl (meth)acrylate as the starting material monomers. Due to containing the ethyl (meth)acrylate (a4), the glass transition temperature of the acrylic resin (A) can easily be 35°C or lower.

In view of easily achieving a glass transition temperature of the acrylic resin (A) of 5°C or higher and 35°C or lower, the content of the ethyl (meth)acrylate (a4) is preferably 30% by mass or more and 95% by mass or less, more preferably 40% by mass or more and 85% by mass or less and more preferably 50% by mass or more and 75% by mass or less, with respect to the total amount of the starting material monomers.

As the ethyl (meth)acrylate, either of ethyl acrylate and ethyl methacrylate can suitably be used, but in view of ease in the copolymerization, industrial versatility and ease in regulation of the softening point, it is more preferable to use ethyl acrylate.

«Other monomers»

The starting material monomers of the acrylic resin (A) may further contain other monomers. The other monomers include acrylic acid, methacrylic acid, 2-hydroxy methacrylate, acrylamide and methacrylamide.

The acrylic resin (A) is a copolymer obtained by copolymerizing the starting material monomers.

Examples of the method of copolymerization include suspension polymerization, emulsion polymerization and solution polymerization. Among these copolymerization methods, the suspension polymerization is preferable for the following reasons: a polymer having a narrow molecular weight distribution and few residual monomers can be obtained; a high-molecular weight polymer can be obtained; the amount of impurities is small because of no need for emulsifiers; and a copolymer resin excellent in water resistance and heat resistance can easily be obtained.

For example, in the case of the suspension polymerization, the polymerization is preferably carried out under the conditions of 50 to 80°C for 2 to 24 hours.

The morphology of the copolymer may be any of alternating, random, block, graft and others.

In aqueous suspension polymerization, one or more suspension stabilizers can be used. Examples thereof include water-soluble polymers such as polyvinyl alcohol, partially saponified polyvinyl alcohol, polyvinylpyrrolidone, (meth)acrylate salts, polyacrylamide, partially saponified polyacrylamide, carboxymethylcellulose, methylcellulose and ethylcellulose, and inorganic salt powders such as calcium phosphates and calcium carbonate.

A polymerization initiator is preferably one that produces an oil-soluble polymerization-initiating radical species through decomposition.

The radical polymerization initiator typically includes azo-based radical polymerization initiators and peroxide-based radical polymerization initiators.

The azo-based radical polymerization initiators include 2,2'-azobispropane, 2,2'-dichloro-2,2'-azobispropane, 1,1'-azo(methylethyl) diacetate, 2,2'-azobis(2-amidinopropane) hydrochloride, 2,2'-azobis(2-aminopropane) nitrate salt, 2,2'-azobisisobutane, 2,2'-azobisisobutylamide, 2,2'-azobisisobutyronitrile, methyl 2,2'-azobis-2-methylpropionate, 2,2'-dichloro-2,2'-azobisbutane, 2,2'-azobis-2-methylbutyronitrile, dimethyl 2,2'-azobisisobutyrate, 1,1'-azobis(sodium 1-methylbutyronitrile-3-sulfonate), 2-(4-methylphenylazo)-2-methylmalonodinitrile, 4,4'-azobis-4-cyanovaleric acid, 3,5-dihydroxymethylphenylazo-2-allylmalonodinitrile, 2,2'-azobis-2-methylvaleronitrile, dimethyl 4,4'-azobis-4-cyanovalerate, 2,2'-azobis-2,4-dimethylvaleronitrile, 1,1'-azobiscyclohexanenitrile, 2,2'-azobis-2-propylbutyronitrile, 1,1'-azobiscyclohexanenitrile, 2,2'-azobis-2-propylbutyronitrile, 1,1'-azobis-1-chlorophenylethane, 1,1'-azobis-1-cyclohexanecarbonitrile, 1,1'-azobis-1-cycloheptanenitrile, 1,1'-azobis-1-phenylethane, 1,1'-azobiscumene, ethyl 4-nitrophenylazobenzylcyanoacetate, phenylazodiphenylmethane, phenylazotriphenylmethane, 4-nitrophenylazotriphenylmethane, 1,1'-azobis-1,2-diphenylethane, poly(bisphenol A-4,4'-azobis-4-cyanopentanoate), and poly(tetraethylene glycol-2,2'-azobisisobutyrate).

The peroxide-based radical polymerization initiators include acetyl peroxide, cumyl peroxide, tert-butyl peroxide, propionyl peroxide, benzoyl peroxide, 2-chlorobenzoyl peroxide, 3-chlorobenzoyl peroxide, 4-chlorobenzoyl peroxide, 2,4-dichlorobenzoyl peroxide, 4-bromomethylbenzoyl peroxide, lauroyl peroxide, potassium persulfate, diisopropyl peroxycarbonate, tetralin hydroperoxide, 1-phenyl-2-methylpropyl-1-hydroperoxide, tert-butyl pertriphenylacetate, tert-butyl hydroperoxide, tert-butyl performate, tert-butyl peracetate, tert-butyl benzoate, tert-butyl perphenylacetate, tert-butyl per-4-methoxyacetate, and tert-butyl per-N-(3-toluyl)carbamate. Examples of polymerization initiators include peroxides such as benzoyl peroxide, lauroyl peroxide, cumene hydroperoxide, t-butyl hydroperoxide, dit-butyl peroxide, and methyl ethyl ketone peroxide.

As a chain transfer agent, a mercapto compound can be added. Examples thereof include chain transfer agents having a hydroxyl group such as mercaptoethanol, mercaptopropanol, mercaptobutanol, mercaptopropanediol, mercaptobutanediol, hydroxybenzenethiol and derivatives of these; 1-butanethiol, butyl-3-mercaptopropionate, methyl 3-mercaptopropionate, 2,2-(ethylenedioxy)diethanethiol, ethanethiol, 4-methylbenzenethiol, dodecyl mercaptan, propanethiol, butanethiol, pentanethiol, 1-octanethiol, cyclopentanethiol, cyclohexanethiol, thioglycerol, and 4,4-thiobisbenzenethiol.

The weight-average molecular weight of the acrylic resin (A) is preferably 100,000 or more and 1,000,000 or less, more preferably 150,000 or more and 800,000 or less and still more preferably 200,000 or more and 600,000 or less.

When the weight-average molecular weight is 100,000 or more, good adhesive force under a high-temperature environment can easily be obtained. When the weight-average molecular weight is 1,000,000 or less, the gelation during polymerization can easily be suppressed.

The epoxy equivalent of the acrylic resin (A) is preferably 2,000 g/eq or more and 30,000 g/eq or less and more preferably 4,000 g/eq or more and 20,000 g/eq or less. When the epoxy equivalent of the acrylic resin (A) is 2,000 g/eq or more, good adhesiveness between the sealing material layers can easily be obtained. When the epoxy equivalent of the acrylic resin (A) is 30,000 g/eq or less, the sealing material layer tends to have increased cohesive force. Due to the increased cohesive force of the sealing material layer, foaming of the sealing material layer can easily be suppressed when moisture contained in an electrolyte membrane is gasified and released during hot press.

The resin composition of the present invention contains (B) an epoxy resin and (C) a curing agent for the epoxy resin, in addition to the above-mentioned acrylic resin (A).

Further, in the resin composition of the present invention, the total content of the epoxy resin (B) and the curing agent for the epoxy resin, (C) is 1 part by mass or more and 30 parts by mass or less, per 100 parts by mass of the acrylic resin (A). When the total content of the epoxy resin (B) and the curing agent for the epoxy resin, (C) is 1 part by mass or more, good reworkability can easily be obtained. When the total content of the epoxy resin (B) and the curing agent for the epoxy resin, (C) is 30 parts by mass or less, good adhesiveness between the sealing material layers can easily be obtained.

The total content of the epoxy resin (B) and the curing agent for the epoxy resin, (C) is preferably 1 part by mass or more and 25 parts by mass or less and more preferably 1 part by mass or more and 20 parts by mass or less, per 100 parts by mass of the acrylic resin (A).

The ratio of the active hydrogen equivalent (g/eq) of the curing agent for the epoxy resin, (C) to the epoxy equivalent (g/eq) of the epoxy resin (B) is preferably 0.8 or more and 1.2 or less.

<(B) Epoxy resin>

The epoxy resin (B) includes one or more selected from the group consisting of phenol novolac type epoxy resins, bisphenol A type epoxy resins and bisphenol F type epoxy resins. Among these, phenol novolac type epoxy resins have smaller water absorbability, resulting in excellent stability with time of the adhesiveness of the sealing material layer, and are thus preferable.

The epoxy equivalent of the epoxy resin (B) is preferably 150 g/eq or more and 1,500 g/eq or less and more preferably 150 g/eq or more and 1,000 g/eq or less. When the epoxy equivalent of the epoxy resin (B) is 1,500 g/eq or less, the epoxy resin (B) can easily be homogeneously dispersed in the acrylic resin (A).

The weight-average molecular weight of the epoxy resin (B) is preferably 250 or more and 5,000 or less and more preferably 300 or more and 3,000 or less. When the weight-average molecular weight of the epoxy resin (B) is 5,000 or less, the epoxy resin (B) can easily be homogeneously dispersed in the acrylic resin (A).

<(C) Curing agent for epoxy resin>

The curing agent for the epoxy resin, (C) includes polyamine-based curing agents; acid anhydride-based curing agents; thiol-based curing agents; latent curing agents such as imidazole compounds, ketimine compounds and dicyandiamide; and the like. Among these, polyamine-based curing agents, for which the reaction temperature may be lower, are preferable.

The polyamine-based curing agents include aliphatic polyamines, aromatic polyamines, and polyamideamines. Among these, aliphatic polyamines, for which the reaction temperature may be lower, are preferable.

The active hydrogen equivalent of the polyamine-based curing agents is preferably 50 g/eq or more and 700 g/eq or less and more preferably 75 g/eq or more and 500 g/eq or less. When the active hydrogen equivalent of the polyamine-based curing agents is 50 g/eq or more, a long pot life of the resin composition can easily be obtained. When the active hydrogen equivalent of the polyamine-based curing agents is 700 g/eq or less, the reaction with the epoxy resin (B) easily progresses so that the resin composition better in durability can be obtained.

(Other additives)

The resin composition may contain additives such as pigments, flame retardants, ultraviolet absorbents, antioxidants, antistatic agents and silane coupling agents, as long as they do not impair the advantageous effects of the present invention.

[Sealing material]

The sealing material of the present invention is formed of the above-mentioned resin composition of the present invention. The form of the sealing material is preferably a solid form such as a particulate form or a sheet-like form, and is more preferably a sheet-like form in view of the handleability.

In the case of shaping the sealing material of the present invention into a sheet-like form, it is preferable that a composition for forming the sealing material layer, the composition containing a solvent and the above-mentioned resin composition of the present invention dissolved therein, should be coated on a base material and dried, to thereby form a sealing material layer, in view of the handleability.

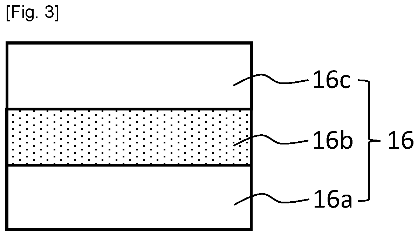

An embodiment of the sealing material of the present invention may be the following embodiment. Fig. 3 is a cross-sectional view showing the following embodiment. A sealing material of the following embodiment is preferably of a sheet-like form.

<Embodiment of a sealing material>

A sealing material has a first base material, a sealing material layer and a second base material in this order, wherein the sealing material layer is formed from the above-mentioned resin composition of the present invention; and at least one of the first base material and the second base material is peelable.

The first base material and the second base material include plastic films of polyethylene terephthalate, polybutylene terephthalate, polyethylene naphthalate, polycarbonate, polyethylene, polypropylene, polystyrene, triacetylcellulose, poly(meth)acrylate, polyvinyl chloride, or polyphenylene sulfide; and papers. Among these, plastic films are preferable and polyethylene naphthalate films are more preferable.

The thickness of the first base material and the second base material is preferably 10 $\mu$m or larger and 100 $\mu$m or smaller and more preferably 25 $\mu$m or larger and 75 $\mu$m or smaller.

It is preferable that the surface of at least one of the first base material and the second base material should be subjected to release treatment, in view of ease in peeling off the at least one thereof from the sealing material layer. A release agent for the release treatment is preferably a release agent based on a non-silicone such as a polyolefin, in view of suppressing the adverse effect by migration of the release component to an electrolyte membrane and the sealing material layer.

The thickness of the sealing material layer is preferably 10 $\mu$m or larger and 500 $\mu$m or smaller and more preferably 20 $\mu$m or larger and 200 $\mu$m or smaller.

The sealing material of the present invention can be used for a sealing site of a fuel cell, more specifically, a sealing site of a cell constituting a fuel cell. When in use, the sealing material is, for example, heated to seal the sealing site of the cell.

The sealing material of the present invention can also be used for a sealing site of a water electrolyzer, more specifically, a sealing site of a cell constituting a water electrolyzer.

[Solid polymer fuel cell]

The solid polymer fuel cell of the present invention has a sealing site including the sealing material of the present invention.

Fig. 1 is a cross-sectional view showing an example of a cell constituting a general fuel cell.

A cell 10 is constituted of a composite (MEA: Membrane and Electrode Assembly) composed of a solid polymer electrolyte membrane 11 and a pair of electrodes (anode, cathode) 12, 13, disposed on respective surfaces of the electrolyte membrane; separators (14, 15) having gas flow channels (14a, 15a) for feeding a fuel gas and an oxidant gas and disposed on respective surfaces of the composite; and sealing materials 16 to hermetically seal between the composite and the separators (14, 15).

A general fuel cell is fabricated by laminating a few tens to a few hundreds of the cells 10 to make a laminate, interposing the laminate between end plates through current collector plates and insulating plates, and tightly fastening these from both ends with fastening bolts.

The cell 10 of Fig. 1 has no region where the sealing material layers face each other and adhere to each other. In recent years, however, as shown in Fig. 2, there has been used also a cell 10 where sealing material layers face each other and adhere to each other.

The sealing material of the present invention can suitably be used as a sealing material in the above-mentioned general-purpose fuel cell. The sealing material of the present invention can suitably be used particularly as a sealing material for fuel cells having a region where sealing material layers face each other and adhere to each other.

[Water electrolyzer]

The water electrolyzer of the present invention has a sealing site including the sealing material of the present invention. It is preferable that the sealing site should be a sealing site of a cell constituting the water electrolyzer.

Examples

Hereinafter, the present invention will be described specifically by way of Examples, but the present invention is no way limited to these Examples.

1. Measurements and Evaluations

On sealing materials of Examples and Comparative Examples, the following measurements and evaluations were carried out. The results are shown in Table 2.

1-1. Reworkability

Each of sealing materials of Examples and Comparative Examples was cut into 2.5 cm in width × 12.5 cm in length to prepare a sample. A PET film (25 μm in thickness × 2.5 cm in width × 12.5 cm in length) was overlapped on a sealing material layer of the cut sample, and laminate-bonded in the room temperature atmosphere to thereby prepare an evaluation sample 1.

The evaluation sample 1 was allowed to stand in the room temperature atmosphere for 1 min; thereafter, the PET film was pulled at an angle of 90° at a rate of 100 mm/min in the room temperature atmosphere by a Tensilon-type tensile tester to measure the peel strength between the sealing material layer and the PET film. The sealing material having a lower peel strength can be said to be better in the reworkability. The sealing material having a peel strength of 0.050 N/mm or less can be said to be good in the reworkability.

1-2. Adhesive force 1 (adhesive force between sealing material layers)

Two sheets of samples were prepared by cutting each sealing material of Examples and Comparative Examples into 5 cm in width × 10 cm in length. The two sheets of the cut sample were overlapped such that the sealing materials faced each other, and the two sheets were temporarily laminate-bonded by a heating roller at 100°C, and thereafter regularly bonded by a hot press at 140°C at 0.2 MPa for 30 seconds. After the regular bonding, the resultant was cut into a strip form of 1 cm in width × 10 cm in length to thereby prepare an evaluation sample 2.

The one cut sample of the evaluation sample 2 was pulled at an angle of 180° at a rate of 10 mm/min in the room temperature atmosphere by a Tensilon-type tensile tester to measure the peel strength between the sealing material layers. The sealing material having a peel strength of 0.20 N/mm or higher can be said to be good in the adhesive force between the sealing material layers.

1-3. Adhesive force 2 (adhesive force between the sealing material layer and the electrolyte membrane)

Two sheets of samples were prepared by cutting each sealing material of Examples and Comparative Examples into 5 cm in width × 10 cm in length.

The two sheets of the cut samples and an electrolyte membrane were overlapped in the following order, temporarily laminate-bonded by a heating roller at 100°C, and thereafter regularly bonded by a hot press at 140°C at 0.2 MPa for 30 seconds. After the regular bonding, the resultant was cut into a strip form of 1 cm in width × 10 cm in length to thereby prepare an evaluation sample 3. The electrolyte membrane used was "Nafion NRE-212 (trade name), thickness: 50 μm", manufactured by DuPont de Nemours, Inc.

The one cut sample of the evaluation sample 3 was pulled at an angle of 180° at a rate of 10 mm/min in the room temperature atmosphere by a Tensilon-type tensile tester to measure the peel strength between the sealing material layer of the one cut sample and the electrolyte membrane. The sealing material having a peel strength of 0.20 N/mm or higher can be said to be good in the adhesive force between the sealing material layer and the electrolyte membrane. In Comparative Example 7, when the evaluation sample was prepared, the sealing material layers of the sample foamed, and it was thus impossible to measure the peel strength.

<Lamination order>

The first base material of the first sheet of the cut samples, the sealing material layer of the first sheet of the cut samples, the electrolyte membrane, the sealing material layer of the second sheet of the cut samples, the first base material of the second sheet of the cut samples

1-4. Adhesive force 3 (hot water-enduring adhesive force between the sealing material layer and the electrolyte membrane)

The evaluation sample 3 was immersed in ion-exchange water in a heat-resistant bottle; thereafter, the heat-resistant bottle containing the sample was put in an oven at 95°C for 500 hours. After the 500 hours, the evaluation sample 3 was taken out from the hot water at 95°C, and allowed to stand in the room temperature atmosphere for 24 hours. Thereafter, the one cut sample of the evaluation sample 3 was pulled at an angle of 180° at a rate of 10 mm/min in the room temperature atmosphere by a Tensilon-type tensile tester to measure the peel strength between the sealing material layer of the one cut sample and the electrolyte membrane. However, in Comparative Examples 2 and 3, in which the electrolyte membrane resulted in peeling after the evaluation sample was taken out from the hot water, it was impossible to measure the peel strength. The sealing material having a peel strength of 0.50 N/mm or higher can be said to be good in the adhesive force between the sealing material layer and the electrolyte membrane. In Comparative Example 7, when the evaluation sample was prepared, the sealing material layer of the sample foamed, and it was thus impossible to measure the peel strength.

1-5. Theoretical Tg

The theoretical Tg of each of (A) acrylic resins obtained in Examples and Comparative Examples was calculated by the following FOX formula. In the following FOX formula, the glass transition temperatures of respective homopolymers of monomers constituting a polymer composed of the monomers of n kinds are represented by $Tg_i(K)$; and mass fractions of the respective monomers are represented by $W_i$ ($W_1+W_2+\cdots+W_i+\cdots W_n = 1$).
(FOX formula)

$$1/Tg = W_1/Tg_1 + W_2/Tg_2 + \cdots + W_i/Tg_i + \cdots W_n/Tg_n$$

2. Preparation of sealing materials

<Example 1>

[Preparation of (A) acrylic resin]

In a separable flask of 1 L in volume, a homogeneous mixed liquid was placed which contained 200 parts by mass of water containing 0.2% by mass of polyvinyl alcohol, 10 parts by mass of a styrene monomer (ST), 25 parts by mass of a methyl methacrylate monomer (MMA), 1 part by mass of a glycidyl methacrylate monomer (GMA), 64 parts by mass of an ethyl acrylate monomer (EA) and 0.1 parts by mass of benzoyl peroxide as a polymerization initiator, and a chain transfer agent for molecular weight regulation.

The mixed liquid was heated to 70°C in a nitrogen atmosphere under stirring to carry out suspension polymerization for 4 hours to obtain a suspension. Then, moisture was removed from the suspension by decantation to obtain a solid material. The solid material was washed with water under suction filtration. After moisture was removed, the solid material was vacuum dried at 60°C to thereby obtain an acrylic resin C as an acrylic resin (A) to be used in Example 1.

The weight-average molecular weight of the acrylic resin C was $31 \times 10^4$. The monomer composition and the molecular weight are shown in Table 1.

[Preparation of resin composition]

The acrylic resin (A), an epoxy resin (B) and a curing agent for the epoxy resin, (C) were mixed in ratios in Table 2 to thereby obtain a resin composition of Example 1.

In Table 2, "1" in the "kind" of the epoxy resin (B) indicates a bisphenol A type epoxy resin (weight-average molecular weight: 370, manufactured by Mitsubishi Chemical Corp., trade name: jER 828, epoxy equivalent: 185); and "2" in the "kind" of epoxy resin indicates a phenol novolac type epoxy resin (manufactured by Nippon Kayaku Co. Ltd., trade name: NC-3000, epoxy equivalent: 270). In Table 1, the curing agent for the epoxy resin, (C) is a polyamine-based curing agent (manufactured by Huntsman Corp., trade name: JEFF AMINE D-400, active hydrogen equivalent: 100).

[Fabrication of sheet-like sealing material]

The prepared resin composition and methyl ethyl ketone were mixed to prepare a coating liquid for forming a sealing material layer. On a polyethylene naphthalate film of 25 μm in thickness, the coating liquid for forming a sealing material layer was coated and thereafter dried at 100°C for 2 min to form a sealing material layer of 20 μm in thickness to thereby obtain a sealing material of Example 1.

<Examples 2 to 13, Comparative Examples 1 to 8>

Resin compositions and sealing materials of Examples 2 to 13 and Comparative Examples 1 to 8 were obtained in the same manner as in Example 1, except for changing the blend ratios of the starting material monomers and the weight-average molecular weights of (A) acrylic resins to the values in Table 1, and changing the blend ratios of the acrylic resin (A), the epoxy resin (B) and the curing agent for the epoxy resin, (C) in each resin composition to the values in Table 2. The weight-average molecular weight of each Example and Comparative Example was regulated by the amount of a chain transfer agent.

Table 1

| | (A) Acrylic resin | | | | | |
| | Monomer composition (% by mass) | | | | Mw ($\times 10^4$) | Theoretical Tg (°C) |
| | ST | MMA | GMA | EA | | |
| Acrylic resin A | 20 | 10 | 1 | 69 | 54 | 5 |
| Acrylic resin B | 10 | 20 | 1 | 69 | 34 | 7 |
| Acrylic resin C | 10 | 25 | 1 | 64 | 31 | 12 |
| Acrylic resin D | 10 | 30 | 1 | 59 | 27 | 18 |
| Acrylic resin E | 5 | 40 | 1 | 54 | 45 | 24 |
| Acrylic resin F | 5 | 17 | 1 | 77 | 41 | 0 |
| Acrylic resin G | 11 | 25 | 0 | 64 | 35 | 13 |
| Acrylic resin H | 10 | 20 | 3 | 67 | 70 | 8 |
| Acrylic resin I | 20 | 20 | 3 | 57 | 52 | 18 |

In Table 1, ST denotes styrene; MMA, methyl methacrylate; EA, ethyl acrylate; and GMA, glycidyl methacrylate.

Table 2

| | Blend ratios of Resin composition (in terms of mass) | | | | | Reworkability | Adhesive force 1 | Adhesive force 2 | Adhesive force 3 |
|---|---|---|---|---|---|---|---|---|---|
| | (A) Acrylic resin | | (B) epoxy resin | | (C) curing agent for epoxy resin | | | | |
| | kind | Amount blended | kind | Amount blended | | [N/mm] | [N/mm] | [N/mm] | [N/mm] |
| Example 1 | C | 100 | 1 | 2 | 1 | 0.043 | 0.75 | 1.11 | 1.52 |
| Example 2 | B | 100 | 2 | 2 | 1 | 0.048 | 0.69 | 0.90 | 0.84 |
| Example 3 | B | 100 | 2 | 5 | 1 | 0.040 | 0.82 | 0.91 | 1.06 |
| Example 4 | B | 100 | 2 | 8 | 2 | 0.036 | 0.77 | 0.93 | 2.07 |
| Example 5 | B | 100 | 2 | 14 | 4 | 0.014 | 0.35 | 0.40 | 2.00 |
| Example 6 | C | 100 | 2 | 2 | 1 | 0.015 | 1.73 | 2.48 | 2.02 |
| Example 7 | C | 100 | 2 | 5 | 1 | 0.013 | 1.01 | 1.08 | 2.25 |
| Example 8 | C | 100 | 2 | 8 | 2 | 0.012 | 1.07 | 1.03 | 2.30 |
| Example 9 | D | 100 | 2 | 2 | 1 | 0.004 | 1.73 | 1.77 | 2.74 |
| Example 10 | D | 100 | 2 | 5 | 1 | 0.005 | 1.52 | 2.12 | 2.28 |
| Example 11 | D | 100 | 2 | 8 | 2 | 0.005 | 1.36 | 1.15 | 2.59 |
| Example 12 | E | 100 | 2 | 2 | 1 | 0.002 | 0.97 | 2.07 | 2.15 |
| Example 13 | E | 100 | 2 | 5 | 1 | 0.002 | 1.30 | 2.40 | 2.22 |
| Comparative Example 1 | F | 100 | 2 | 8 | 2 | 0.112 | 0.50 | 0.67 | 0.81 |
| Comparative Example 2 | A | 100 | 1 | 2 | - | 0.065 | 0.44 | 0.78 | - |
| Comparative Example 3 | H | 100 | - | - | - | 0.030 | 0.58 | 0.36 | - |
| Comparative Example 4 | B | 100 | 2 | 33 | 9 | 0.007 | 0.26 | 0.16 | 1.88 |
| Comparative Example 5 | B | 100 | 2 | 64 | 18 | 0.005 | 0.19 | 0.07 | 0.73 |
| Comparative Example 6 | C | 100 | 3 | 6 | - | 0.005 | 0.10 | 0.49 | 0.38 |
| Comparative Example 7 | G | 100 | 1 | 2 | 1 | 0.004 | 0.70 | - | - |
| Comparative Example 8 | I | 100 | 1 | 2 | 1 | 0.003 | 0.08 | 0.66 | 0.96 |

From the results in Tables 1 and 2, it can be found that the resin compositions for sealing materials of the Examples bring about good reworkability, and also good adhesiveness between sealing material layers (adhesive force 1). It can also be found that the resin compositions for sealing materials of the Examples bring about good adhesiveness between sealing material layers and the electrolyte membrane (adhesive forces 2 and 3).

Reference Signs List

| | |
|---|---|
| 10 | CELL |
| 11 | ELECTROLYTE MEMBRANE |
| 12, 13 | ELECTRODE |
| 14, 15 | SEPARATOR |
| 14a, 15a | GAS FLOW CHANNEL |
| 16 | SEALING MATERIAL |
| 16a | FIRST BASE MATERIAL |
| 16b | SEALING MATERIAL LAYER |
| 16c | SECOND BASE MATERIAL |

**Claims**

1. A resin composition for a sealing material, comprising (A) an acrylic resin, (B) an epoxy resin, and (C) a curing agent for the epoxy resin,

   wherein the acrylic resin (A) has a glass transition temperature of 5°C or higher and 35°C or lower;
   the acrylic resin (A) is a copolymer of starting material monomers containing (a1) methyl methacrylate, (a2) styrene and (a3) glycidyl (meth)acrylate;
   a proportion of the glycidyl (meth)acrylate (a3) in a total amount of the starting material monomers is less than 3.0% by mass; and
   a total content of the epoxy resin (B) and the curing agent for the epoxy resin, (C) is 1 part by mass or more and 30 parts by mass or less, per 100 parts by mass of the acrylic resin (A).

2. The resin composition according to claim 1, wherein the epoxy resin (B) is any one or more selected from the group consisting of phenol novolac type epoxy resins, bisphenol A type epoxy resins and bisphenol F type epoxy resins.

3. The resin composition according to claim 1, wherein the epoxy resin (B) has an epoxy equivalent of 150 g/eq or more and 1,500 g/eq or less.

4. The resin composition according to claim 1, wherein the curing agent for the epoxy resin, (C) is a polyamine-based curing agent.

5. A sealing material formed of the resin composition according to claim 1.

6. A sealing material having a first base material, a sealing material layer and a second base material in this order, wherein the sealing material layer is formed of the resin composition according to claim 1; and at least one of the first base material and the second base material is peelable.

7. The sealing material according to claim 5 or 6, wherein the sealing material is a sealing material for a solid polymer fuel cell.

8. The sealing material according to claim 5 or 6, wherein the sealing material is a sealing material for a water electrolyzer.

9. A solid polymer fuel cell, having a sealing site including the sealing material according to claim 7.

10. The solid polymer fuel cell according to claim 9, wherein in the solid polymer fuel cell, the sealing material has a sealing material layer formed of the resin composition according to claim 1, and the solid polymer fuel cell has a region where the sealing material layers face each other and adhere to each other.

11. A water electrolyzer, having a sealing site including the sealing material according to claim 8.

[Fig. 1]

[Fig. 2]

[Fig. 3]

## INTERNATIONAL SEARCH REPORT

International application No.

**PCT/JP2024/003792**

| | |
|---|---|
| **A. CLASSIFICATION OF SUBJECT MATTER** | |

*H01M 8/0284*(2016.01)i; *C08L 33/14*(2006.01)i; *C08L 63/00*(2006.01)i; *C09K 3/10*(2006.01)i; *C25B 1/04*(2021.01)i; *C25B 9/00*(2021.01)i; *C25B 9/60*(2021.01)i; *H01M 8/0271*(2016.01)i; *H01M 8/10*(2016.01)i

FI: H01M8/0284; H01M8/0271; H01M8/10 101; C08L33/14; C08L63/00 A; C09K3/10 E; C09K3/10 L; C25B1/04; C25B9/00 A; C25B9/60

According to International Patent Classification (IPC) or to both national classification and IPC

**B. FIELDS SEARCHED**

Minimum documentation searched (classification system followed by classification symbols)

H01M8/0284; C08L33/14; C08L63/00; C09K3/10; C25B1/04; C25B9/00; C25B9/60; H01M8/0271; H01M8/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-002029 A (PANAC CO., LTD.) 05 January 2015 (2015-01-05) | 1-11 |
| A | JP 2023-017551 A (PANAC CO., LTD.) 07 February 2023 (2023-02-07) | 1-11 |
| A | JP 8-245858 A (NOF CORPORATION) 24 September 1996 (1996-09-24) | 1-11 |
| A | WO 2014/109212 A1 (DAICEL CORP.) 17 July 2014 (2014-07-17) | 1-11 |
| A | JP 2019-091535 A (TOYOTA JIDOSHA KABUSHIKI KAISHA) 13 June 2019 (2019-06-13) | 1-11 |

☐ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/003792**

| Patent document cited in search report | | | Publication date (day/month/year) | Patent family member(s) | | | Publication date (day/month/year) |
|---|---|---|---|---|---|---|---|
| JP | 2015-002029 | A | 05 January 2015 | (Family: none) | | | |
| JP | 2023-017551 | A | 07 February 2023 | (Family: none) | | | |
| JP | 8-245858 | A | 24 September 1996 | (Family: none) | | | |
| WO | 2014/109212 | A1 | 17 July 2014 | JP | 2018-150562 | A | |
| JP | 2019-091535 | A | 13 June 2019 | US | 2019/0148693 | A1 | |
| | | | | DE | 102018127620 | A1 | |
| | | | | CN | 109768297 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016094581 A
- JP 2015002029 A